Europäisches Patentamt

European Patent Office

Office européen des brevets

(11) Veröffentlichungsnummer: **0 413 368 B1**

(12) **EUROPÄISCHE PATENTSCHRIFT**

(45) Veröffentlichungstag der Patentschrift: **17.08.94**

(51) Int. Cl.5: **A21D 17/00**, C12G 3/02, C12C 5/00, C12G 3/06

(21) Anmeldenummer: **90115934.3**

(22) Anmeldetag: **20.08.90**

(54) **Brotaroma, seine Herstellung und seine Verwendung zur Aromatisierung von Nahrungs- und Genussmitteln.**

(30) Priorität: **18.08.89 EP 89115256**

(43) Veröffentlichungstag der Anmeldung:
**20.02.91 Patentblatt 91/08**

(45) Bekanntmachung des Hinweises auf die
Patenterteilung:
**17.08.94 Patentblatt 94/33**

(84) Benannte Vertragsstaaten:
**AT BE CH DE FR GB LI LU**

(56) Entgegenhaltungen:
**EP-A- 0 263 335**
**EP-A- 0 360 007**
**DE-A- 3 706 303**

**SOVIET INVENTIONS ILLUSTRATED, section cH, week Y17,1977 Derwent PublicationsLtd,London,GB klass. D, seite 4, n 77/30509Y/17 & SU-A-511341 (SVIRIDA V.G.) 12-08-1976**

(73) Patentinhaber: **FÜRSTLICHE BRAUEREI THURN UND TAXIS REGENSBURG GMBH**
**Galgenbergstrasse 14**
**D-93053 Regensburg (DE)**

(72) Erfinder: **Schifferl, Ludwig**
**Nelkenstrasse 8**
**D-8411 Sinzing (DE)**

(74) Vertreter: **Patentanwälte Beetz - Timpe - Siegfried Schmitt-Fumian - Mayr**
**Steinsdorfstrasse 10**
**D-80538 München (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Brotaroma, insbesondere Roggenbrotaroma; Verfahren zu seiner Herstellung, seine Verwendung; besonders zur Aromatisierung von Nahrungs- und Genußmitteln; insbesondere Biere.

In DE 39 27 315 sind Biere und Verfahren zu ihrer Herstellung beschrieben, die insbesondere unter Verwendung von Roggen als Stärkequelle und Anwendung spezieller Mälz- und Maischverfahren erhältlich sind und sich durch einen roggenbrotartigen Geruch und Geschmack bei zugleich guter Schaumbildung und Schaumstabilität auszeichnen. In dieser Druckschrift sind ferner Biere beschrieben, die unter Verwendung einer roggenfreien oder roggenarmen Stärkequelle und Aromatisierung mit Roggenaroma bzw. Roggenbrotaroma nach der Hauptgärung hergestellt sind. Nähere Angaben zur Herstellung von Roggenbrotaroma bzw. entsprechenden Extrakten finden sich in dieser Druckschrift nicht. Bei den genannten Extrakten handelt es sich um Konzentrate aus Roggenbier oder Roggenbierwürze oder um Roggenmalzpulver oder Roggenmalzbrotfladen, die nicht aus einem eigentlichen Extraktionsschritt stammen.

Obgleich zu den Inhaltsstoffen von Roggenbrot umfangreiche Literatur vorliegt (vgl. z.B. J. A. Maga, Crit. Rev. Food Technol. 5 (1974) 55; P. Schieberle, W. Grosch, Z. Lebensm. Unters. Forsch. 177 (1983) 173 und 178 (1984) 479) und bekannt ist, daß sich insbesondere durch Maillard-Reaktionen beim Backprozeß oder beim Malzrösten aus Aminosäuren und reduzierenden Zuckern flüchtige heterocyclische Verbindungen wie Furane, Pyrone, Pyrrole, Pyrazine, Thiazole, etc. bilden, die brottypische Aromaträger sind, war die chemische Zusammensetzung des Roggenbrotaromas bisher gleichwohl nicht mit hinreichender Genauigkeit und Vollständigkeit bekannt. Ferner war nicht bekannt, ob und welche aromawesentlichen Komponenten des Brotaromas und insbesondere des Roggenbrotaromas im Verlauf einer Bierherstellung unter überwiegendem oder ausschließlichem Einsatz von Roggenmalz Konzentrationsänderungen und chemischen Änderungen unterliegen, da die Bierherstellung in molekularer Hinsicht, etwa im Vergleich zur Herstellung anderer durch Gärung hergestellter alkoholischer Getränke wie Wein, ein außerordentlich komplexer Prozeß ist, der zu einem Spektrum von Hunderten von chemischen Substanzen im fertigen Bier führt, deren Auftreten und Menge nur zu einem geringen Teil durch spezielle brautechnische Maßnahmen kontrolliert werden können.

Aus EP-A1-263 335 sind wasserlösliche Extrakte mit Brotaroma bekannt, welche die im Brot bestimmenden, wasserlöslichen Brotaromastoffe enthalten. Sie werden durch Verflüssigung von Brot in Wasser mit einem Enzym, Extraktion der erhaltenen Brotmaische, anschließende Wasserdampfdestillation unter Gewinnung des Destillats mit den leichtflüchtigen Aromabestandteilen, Abtrennung der ungelösten Feststoffe, Eindampfen des geklärten Extrakts und abschließende Vereinigung des Destillats mit dem eingedampften Extrakt und Trocknung hergestellt.

Aus SU-A-511 341 ist ferner ein alkoholisches Getränk mit Brotaroma und hohem Alkoholgehalt bekannt, das durch fraktionierte Destillation eines durch Extraktion von Roggenkleie mit wäßriger Alkohollösung erhaltenen Extrakts hergestellt wird.

Im Rahmen der Erfindung wurden die Aromastoffe eines aus Roggenmalz hergestellten Biers und der entsprechenden Würze (Pfannevollwürze) sowie des Brüdenkondensats aus dem Würzekochen durch Flüssig-Flüssig-Extraktion isoliert und gaschromatographisch und massenspektrometrisch untersucht. Dabei wurden 214 Einzelkomponenten identifiziert und auf ihren sensorischen, organoleptischen Beitrag zum Gesamtaroma sowie auf durch den Brauvorgang bedingte Konzentrationsänderungen geprüft.

Es handelt sich hierbei um folgende Verbindugen, die in der nachstehenden Tabelle 1 aufgelistet sind.

## Tabelle 1

### Terpenoide und Carotinoide

Myrcen
Limonen
1,8-Cineol
Linalool
α-Terpineol
Geraniol
Humulol
T-Cadinol
(E,E)-Farnesol
α-Terpineolacetat
(E)-Geraniumsäuremethylester
Dihydroactinidiolid
Ethylacetat
Ethylbutanoat
Ethylhexanoat
Ethyloctanoat
Ethyldecanoat
Ethyldodecanoat
Ethylhexadecanoat
Ethyl-4(Z)-decenoat
Ethylpyruvat
Ethyllactat
Ethyl-4-hydroxybutanoat
Isoamyl-4-hydroxybutanoat
Ethyl-4-oxopentanoat

Ethyl-3-phenyllactat
N-Acetylglycinsäureethylester
Propylacetat
Isobutylacetat
Isoamylacetat
Hexylacetat
Octylacetat
1,3-Propandioldiacetat
1,3-Propandiolmonoacetat
Acetonylacetat
threo-2,3-Butandiolmonoacetat
erythro-2,3-Butandiolmonoacetat
3-Methylthiopropylacetat
2-Phenylethylformiat
2-Phenylethylacetat
Furfurylacetat
Diethylphthalat


<u>Säuren</u>

Ameisensäure,
Essigsäure
Propansäure
Buttersäure
Valeriansäure
Hexansäure
Octansäure
Nonansäure
Decansäure
Dodecansäure
4(Z)-Decensäure
Isobuttersäure
2- und 3-Methylbuttersäure
Iso-Hexensäure
Benzoesäure


<u>Alkohole</u>

Ethanol
Propanol
Butanol
Pentanol
Hexanol
Heptanol
Octanol
Decanol
Pentan-2-ol
1-Penten-3-ol
1-Octen-3-ol

1,5-Octadien-3-ol
4-Pentenol
2(E)-Pentenol
2(Z)-Pentenol
3(Z)-Hexenol
2(E)-Hexenol
2-Methyl-3-buten-2-ol
3-Methyl-3-buten-2-ol
3-Methyl-3-buten-1-ol
3-Methyl-2-buten-1-ol
2-Methylpropanol
2-Methylbutanol
3-Methylbutanol
4-Methylpentanol
3-Methylpentanol
3-Ethoxypropan-1-ol
2-Methylthioethanol
3-Methylthiopropan-1-ol
Benzylalkohol
2-Phenylethanol
threo-2,3-Butandiol
erythro-2,3-Butandiol


Aldehyde und Ketone

Pentanal
Hexanal
Heptanal
Octanal
Nonanal
Decanal
2(E)-Butenal
2(E)-Heptenal
2(E)-Octenal
2(E)-Nonenal
4(Z)-Heptenal
2,4-(E,E)-Heptadienal
2,4-(E,E)-Nonadienal
2-Heptanon
Aceton
1-Hydroxyaceton
2,3-Butandion
Acetoin (3-Hydroxybutan-2-on)
2,3-Pentandion
3-Hydroxypentan-2-on
2-Hydroxypentan-3-on
3-Penten-2-on
2,5-Hexandion
1-Octen-3-on
2-Methylpropanal

2-Methylbutanal
3-Methylbutanal
2-Methyl-2-butenal
3-Methyl-2-butenal
4-Methyl-3-penten-2-on (Mesityloxid)
Benzaldehyd
2-Acetophenon
2-Phenylacetaldehyd
3-Methylthiopropanal (Methional)
Cyclopentanon
2-Cyclopentenon
3-Methyl-2-cyclopenten-1-on
2-Hydroxy-3-methylcyclopent-2-en-1-on


Benzole und Phenole

Toluol
Styrol
Phenol
p-Cresol
Dimethylphenol
Vinylphenol
Guajacol
4-Ethylguajacol
4-Vinylguajacol
(E)-iso-Eugenol
Vanillin
Acetovanillon
2,6-Dimethoxyphenol
4-Vinyl-2,6-dimethoxyphenol


Furane und Pyrane

2-Pentylfuran
Furfural
Furfurol
5-Methylfurfural
5-Methyl-2-furfurol
2-Acetylfuran
2-Acetyl-5-methylfuran
2-Propionylfuran
2-Propionyl-5-methylfuran
5-Hydroxymethylfurfural (HMF)
2-Hydroxyacetylfuran
3-Hydroxy-2-acetylfuran (Isomaltol)
3-Hydroxy-2-methylpyranon (Maltol)
5-Hydroxy-5,6-dihydromaltol
2-Methyltetrahydrofuran-3-on
2-Methylfuran-3(2H)-on

2,5-Dimethylfuran-3(2H)-on
2,5-Dimethyl-4-hydroxyfuran-3(2H)-on
5-Methylfuran-2(3H)-on (3-Penten-4-olid)
3-Methyltetrahydrofuran-2-on
5-Methyltetrahydrofuran-2-on
5,5-Dimethylfuran-2(5H)-on
Tetrahydrofuran-2-on (4-Butanolid)
5-Methylfuran-2(5H)-on (2-Penten-4-olid)
5-Ethyltetrahydrofuran-2-on
3-Methylfuran-2(5H)-on
Furan-2(5H)-on (2-Buten-4-olid)
5-Ethylfuran-2(5H)-on (2-Hexen-4-olid)
5-Pentyltetrahydrofuran-2-on


Pyrazine

Pyrazin
2-Methylpyrazin
2,5-Dimethylpyrazin
2,6-Dimethylpyrazin
2-Ethylpyrazin
2,3-Dimethylpyrazin
2-Ethyl-6-methylpyrazin
2-Ethyl-5-methylpyrazin
Trimethylpyrazin
2-Ethyl-3-methylpyrazin
Vinylpyrazin
Diethylpyrazin
2-Ethyl-3,6-dimethylpyrazin
2-Ethyl-3,5-dimethylpyrazin
Tetramethylpyrazin
5-Methyl-6,7-dihydro-5H-cyclopentapyrazin
2-Acetylpyrazin
2-Furylpyrazin
2-(2-Furyl)-5-methylpyrazin
2-(2-Furyl)-6-methylpyrazin


Sonstige Verbindungen

Pyridin
2-Methylpyridin
2-Acetylpyridin
2-Pyridinmethanol
Pyrrol
1-Methyl-2-formylpyrrol
1-Acetonylpyrrol
2-Acetylpyrrol
2-Formylpyrrol
2-Pyrrolidinon

```
1-Furfuryl-2-formylpyrrol
5-Formyl-6-methyl-2,3-dihydro-1H-pyrrolizin
Indol
N-3-Methylbutylacetamid
Thiazol
2-Acetylthiazol
4-Methyl-5-thiazolethanol
Dimethylsulfid
Dimethyldisulfid
Dimethylsulfoxid
2-Methyltetrahydrothiophen-3-on
Tetrahydrothiophen-3-on
2-Thiophencarboxaldehyd.
```

Grundsätzlich wurde festgestellt, daß das typische Roggenaroma durch das Zusammenwirken zahlreicher Substanzen zustandekommt. Neben kurzkettigen Alkoholen (Pentanol, Hexanol, 1-Penten-3-ol) sind es in erster Linie Carbonylverbindungen, die ein brotig-malziges bzw. roggenartiges Aroma hervorrufen. Außer gesättigten und ungesättigten Aldehyden (Pentanal, Hexanal, Heptanal, 2(E)-Butenal, 2(E)-Octenal, 2(E)-Nonenal, 4(Z)-Heptenal, 2,4(E,E)-Heptadienal und 2,4 (E,E)-Nonadienal) tragen auch die aus dem Strecker-Abbau (2-Methylpropanal, 2- und 3-Methylbutanal, 2-Phenylacetaldehyd und Methional) sowie die aus Maillard-Reaktionen resultierenden, sehr geruchsaktiven heterocyclischen Verbindungen mit Carbonylfunktion zum Roggenaroma bei. Besonders 2-Acetylpyridin, 2-Acetylpyrazin, 6,7-Dihydro-5-methyl-5H-cyclopentapyrazin und 2-Ethyl-3-methylpyrazin, die beiden Ethyldimethylpyrazine, 1-Acetonylpyrrol, 2-Acetylthiazol und 2-Thiophencarboxaldehyd sind für ein brotartiges Aroma wesentlich. Die oben erwähnten Verbindungen liegen in der deutlich roggenbrotartig riechenden Pfannevollwürze in höherer Konzentration vor als in der Anstellwürze und im resultierenden Roggenbier. Ein Teil dieser Substanzen, insbesondere der kurzkettigen Alkohole und Aldehyde sowie der Pyrazine, dampfen beim Würzekochen ab und sind im Brüdenkondensat nachweisbar. Dies ist eine der Ursachen für die festgestellte Roggenaromaverflachung im Verlauf des Brauprozesses. Ein weiterer Grund ist in der Reduktion geruchsaktiver Carbonylverbindungen durch die Hefe bei der Würzevergärung zu sehen. Auch die Gehalte an Maillard-Reaktionsprodukten mit Carbonylfunktion nehmen bei der Gärung drastisch ab. Beim Würzekochen gebildete Furanderivate sowie die der Hopfengabe zuzuordnenden Terpenoide und die dem Hefestoffwechsel entstammenden, zum Teil recht geruchsstarken Gärungsnebenprodukte (insbesondere Ester, mittelkettige Fettsäuren und Fuselalkohole) überdecken das schwächer gewordene Roggenaroma im Bier. Daher kann beispielsweise ein wirklich stark ausgeprägtes Roggenbrotaroma von beliebigem Bier nur durch nachträgliche Aromatisierung mit entsprechendem Roggenbrotaroma nach der Hauptgärung bzw. einer eventuellen Nachgärung erzielt werden.

Der Erfindung liegt die Aufgabe zugrunde, Brotaroma und insbesondere Roggenbrotaroma, seine Herstellung sowie seine Verwendung zur Aromatisierung von Nahrungs- und Genußmitteln und insbesondere Getränken sowie beliebigen anderen Produkten, z.B. von pharmazeutischen Hilfs- und/oder Trägerstoffen, mit Brotaroma anzugeben, wobei sich die aromatisierten Produkte unabhängig von ihrem speziellen Herstellungsverfahren und insbesondere unabhängig von Erhitzungs- und/oder Vergärtingsschritten durch ausgeprägten und in Stärke und organoleptischem Umfang einstellbaren Brot- bzw. Roggenbrotgeschmack aus zeichnen sollen.

Die Aufgabe wird anspruchsgemäß gelöst. Die anhängigen Anspruche beziehen sich auf vorteilhafte Ausführungsformen der Erfinding.

Die Erfindungskonzeption eröffnet die Möglichkeit, Brotaroma und insbesondere Roggenbrotaroma aus natürlichen bzw. auf natürliche Weise hergestellten Produkten wie Brot oder Brotkruste in gewissermaßen natürlicher Form zu gewinnen und gegebenenfalls zu fraktionieren, um wesentliche Aromakomponenten zu betonen, wie auch auf der Basis der ermittelten wesentlichen Aromakomponenten natürlicher Produkte entsprechende künstliche Kompositionen von naturidentischen Aromakomponenten herzustellen.

Mit diesen Brotaromen können folglich im Rahmen der Erfindungskonzeption beliebige Substrate wie Nahrungs- und Genußmittel, vor allem Getränke, sowie etwa auch pharmazeutische Trägerstoffe oder diätetische Produkte mit einem entsprechenden Brotaroma versehen werden.

Hierdurch können Nahrungs- und Genußmittel sowie Würzmittel hergestellt werden, die sich durch einen bisher nicht realisierbaren typischen und einstellbar starken Brotgeschmack und -geruch auszeichnen und folglich neuartige sensorische, organoleptische Eigenschaften besitzen. Die Verwendbarkeit der erfindungsgemäßen Aromen ist daher auch nicht auf die Aromatisierung von Bieren und bierartigen Getränken beschränkt.

Aufgrund der Naturidentität der Aromakomponenten sind die erfindungsgemäßen Aromen auch lebensmittelrechtlich unbedenklich, da kein im eigentlichen Sinne künstlicher Geruch und Geschmack der aromatisierten Prodtikte hervorgerufen wird.

Im Fall der künstlichen Kompositionen von Aromakomponenten können ferner durch Wahl der Mengenanteile ihrer Komponenten in sehr weitem Maße Modifizierungen des Aromas vorgenommen werden, wodurch sich weitere Anwendungsmöglichkeiten eröffnen.

Ein erfindungsgemäßes Verfahren zur Herstellung von Brotaroma beruht auf der Extraktion von entsprechenden natürlichen Produkten bzw. auf natürliche Weise hergestellten Produkten wie Brot oder Brotkruste, Getreidemalz oder einer aus einem entsprechenden Getreidemalz hergestellten Bierwürze als Aromaquelle mit einem Extraktionsmittel; das erforderlichenfalls abgetrennt wird, wenn es für den beabsichtigten Verwendungszweck nicht geeignet ist.

Die Erfindungskonzeption wird im folgenden unter Bezug auf Roggenbrotaroma bzw. roggenbrotartige Aromen näher erläutert, auf die sich der Erfindungsgegenstand insbesondere bezieht; die Erfindung umfaßt jedoch in gleicher Weise auch die Gewinnung und Verwendung von Aromen aus anderen Aromaquellen als Roggenprodukte, z.B. aus entsprechenden Produkten auf der Basis von Reis, Hafer, Weizen, Dinkel, Sorghum, Mais und anderen proteinhaltigen Stärkequellen.

Das Ausgangsmaterial für die Extraktion von Roggenbrotaroma kann ein beliebiges Roggenbrot sein, wie es in Form von Roggenbrot, Roggenvollkornbrot, Pumpernickel udgl. handelsüblich ist. Nachdem sich aufgrund des Temperaturverlaufs bei üblichen Backprozessen die roggenbrottypischen Aromakomponenten in besonders hoher Konzentration in der Brotkruste finden, ist es bevorzugt, den Krustenanteil des Brotes dadurch zu erhöhen, daß das Brot in einer möglichst flachen Form ausgebacken wird, beispielsweise in Form von Brotfladen. Als Ausgangsmaterialien für den entsprechenden Brotteig kommen neben den üblichen Mischungen aus Roggenmehl und Roggenkorn und ggfs. anderen Zusätzen auch Roggenmalz und insbesondere Roggenfarbmalz, Roggenkaramelmalz und/oder Roggenbrühmalz in Frage. Aufgrund der höheren Herstellungstemperatur von Farbmalz, Karamelmalz bzw. Brühmalz finden sich in diesen Malzen im Gegensatz zum normalen Roggenmalz höhere Anteile an roggenspezifischen Aromakomponenten. Die Roggenbrotfladen können entsprechend aus beliebigen Mischungen von Roggenmehl, Roggenkorn und/oder Roggenmalz sowie üblichen weiteren Zusätzen hergestellt werden. Nachdem es insbesondere auf die bei der Krustenbildung während des Backprozesses durch thermisch induzierte chemische Reaktionen entstehenden Aromakomponenten ankommt, ist es entsprechend nicht erforderlich, die zu extrahierenden Brotprodukte mit einem üblichen Backtriebmittel wie Hefe oder Backpulver herzustellen, da der weiche Anteil entsprechender Brotprodukte möglichst gering sein soll.

Die Herstellung des Brotteigs sowie der Backvorgang können in üblicher Weise erfolgen. Der Teig wird beispielsweise unter Verwendung von Wasser und Mehl zum Anteigen hergestellt, worauf, ggfs. nach Quellenlassen des Teigs bei einer üblichen Backtemperatur im Bereich von etwa 180 bis 250 °C gebacken wird. Auch höhere Backtemperaturen sind je nach der Backdauer möglich.

Nachdem sich eine sehr ähnliche Roggenbrotaromazusammensetzung auch in Bierwürzen findet, die unter Verwendung von ausschließlich Roggenmalz oder von überwiegend Roggenmalz hergestellt wurden, können auch solche Bierwürzen als Aromaquellen zur Extraktion von Roggenbrotaroma dienen. Dabei muß es sich nicht notwendig um Bierwürzen handeln, die in dieser Form auch zur weiteren Herstellung von Roggenbier verwendbar sind, sondern es können auch Bierwürzen auf Roggenbasis herangezogen werden, deren Anteil an Farbmalz, Karamelmalz oder Brühmalz höher als zur üblichen Bierherstellung ist, um so die Gehalte an wesentlichen Aromakomponenten zu erhöhen.

Nachdem es ferner bei der Entstehung des Roggenbrotaromas wesentlich auf den thermischen Prozeßablauf ankommt, können auch brotartige Ausgangsmaterialien als Aromaquellen zur Extraktion herangezogen werden, die einer einem Backvorgang entsprechenden thermischen Behandlung unterzogen wurden, beispielsweise ausgehend aus gequollenem Roggen oder Roggenmalz, ohne daß übliche Gewürze bzw. Salz oder andere bei der Brotherstellung übliche Zusätze zugegeben wurden. Auch die Verwendting oder Mit verwendung von entsprechendem Mehl ist nicht unbedingt erforderlich, da die Bildung der Aromakomponenten auch in den Getreidekörnern bzw. den Malzkörnern stattfindet.

Das oben erläuterte, Roggenbrotaroma enthaltende Ausgangsmaterial wird als Aromaquelle extrahiert. Die Extraktion kann prinzipiell in an sich bekannter Weise unter Verwendung üblicher wäßriger bzw. insbesondere organischer Lösungsmittel oder Lösungsmittelgemische als Extraktionsmittel durchgeführt werden, wobei sich gezeigt hat, daß insbesondere Gemische von Kohlenwasserstoffen wie Pentan mit halogenierten Kohlenwasserstoffen wie Dichlormethan, besonders Pentan-Dichlormethan-Gemische im Massenverhältnis 2:1, sowie ferner Diethylether und Ethanol besonders geeignete Extraktionsmittel sind.

Zur Extraktion wird das Ausgangsmaterial, sofern es nicht bereits in Form einer wäßrigen Lösung bzw. Dispersion vorliegt, wie im Fall der Würze, mit Wasser versetzt, ggfs. nach vorheriger Zerkleinerung des Ausgangsmaterials. um die Oberfläche zu vergrößern. Die Extraktion mit Lösungsmitteln kann in üblichen Vorrichtungen durchgeführt werden, beispielsweise in Gleichstrom- wie auch in Gegenstrom-Extraktionseinrichtungen, und kann diskontinuierlich oder kontinuierlich vorgenommen werden. Der erhaltene Extrakt wird erforderlichenfalls, ggfs. nach Filtration aufkonzentriert. Wenn das Lösungsmittel vollständig entfernt werden soll, wird der erhaltene Extrakt bis zur Trockne bzw. bis zur Lösungsmittelfreiheit eingedampft.

Nach einer vorteilhaften Weiterbildung der Lösungsmittelextraktion kann erfindungsgemäß so verfahren werden, daß die Aromaquelle vor der Extraktion einer Wasserdampfdestillation unterworfen und das dabei erhaltene Wasserdampfdestillat, das die Aromakomponenten enthält, anschließend mit dem Extraktionsmittel extrahiert wird.

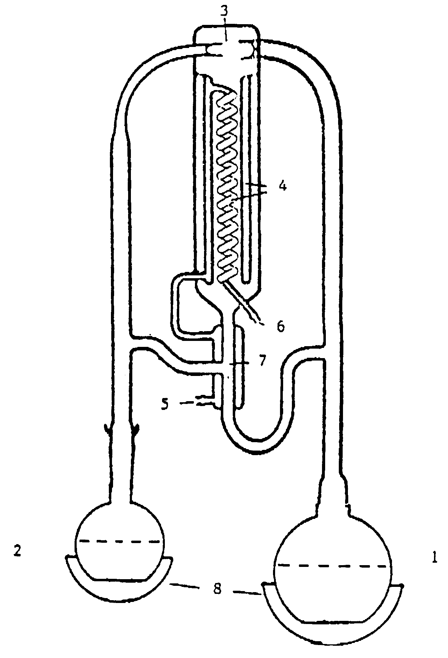

Die Extraktion des Brotaromas kann ferner vorteilhaft auch durch simultane Wasserdampfdestillation-Extraktion (SDE) der Aromaquelle durchgeführt werden. Eine hierzu geeignete Vorrichtung ist in der Zeichnung schematisch dargestellt. In der mit der Heizeinrichtung 8 beheizten Vorlage 1 wird das Ausgangsmaterial zusammen mit einer geeigneten Wassermenge vorgelegt. In der mit einer Heizeinrichtung 8 beheizten Vorlage 2 befindet sich das organische Extraktionsmittel, insbesondere Diethylether. Aus der Vorlage 1 verdampft Wasserdampf, wobei durch Wasserdampfdestillation Aromastoffe hinreichender Flüchtigkeit mitdestilliert werden. In der Mischzone 3 treffen die bei der Wasserdampfdestillation aus der Vorlage 1 resultierenden Dämpfe, welche die Aromakomponenten enthalten, mit dem dampfförmigen Extraktionsmittel aus der Vorlage 2 zusammen; das Gemisch wird im Intensivkühler 4 mit Kühlwasserzulauf 5 und Kühlwasserablauf 6 abgekühlt und kondensiert und gelangt in eine Phasentrennungszone 7, aus der die untere, wäßrige Phase über die Siphonverbindung wieder zur Wasserdampfdestillation bzw. zur Vorlage 1 zurückgelangt, während die obere, organische Extraktphase in die Vorlage 2 gelangt, in der sich folglich die Aromakomponenten bei Fortführung der Wasserdampfdestillation immer mehr anreichern.

Diese Kombination von Wasserdampfdestillation und Lösungsmittelextraktion hat den Vorteil, daß die Extraktion nicht unter direktem Kontakt mit der Aromaquelle, sondern durch Kontakt mit dem daraus erhaltenen Wasserdampfdestillat erfolgt, wobei zugleich Filtrationsschritte eingespart werden und eine besonders reine organische Extraktphase erhalten wird.

Verluste an wichtigen Aromakomponenten treten ferner bei dieser Verfahrensweise nicht auf, da durch die Wasserdampfdestillation auch Aromakomponenten mit geringer Flüchtigkeit bzw. geringem Dampfdruck abdestilliert und mit dem Extraktionsmittel in Kontakt gebracht werden.

Der in der Vorlage 2 anfallende, je nach Dauer und Menge des Ausgangsmaterials mehr oder weniger konzentrierte Extrakt wird dann in einer geeigneten Vorrichtung, beispielsweise einer Vigreux-Kolonne, auf ein geringes Volumen bzw. bis zur Lösungsmittelfreiheit eingedampft. Die Abtrennung von Extraktionsmitteln hoher Flüchtigkeit, wie Diethylether, kann auch durch einfaches Überleiten von gasförmigem Stickstoff über den Extrakt erfolgen, wobei ebenfalls kein relevanter Verlust an leichtflüchtigen Aromakomponenten eintritt.

Eine besonders gut geeignete Extraktionsmethode besteht in der Verwendung von flüssigem, überkritischem $CO_2$ als Extraktionsmittel (lösungsmittelfreie $CO_2$-Extraktion). Die $CO_2$-Extraktion stellt eine besonders bevorzugte Ausführungsform des erfindungsgemäßen Verfahrens dar, da überkritisches flüssiges $CO_2$ ein außerordentlich gutes Lösungsmittel darstellt, mit dem die Aromakomponenten des Roggenaromas bzw. Roggenbrotaromas besonders einfach und unter besonders hoher Anreicherung gewonnen werden können. Die $CO_2$-Extraktion hat, abgesehen von der leichten Verfügbarkeit von $CO_2$ insbesondere bei brauereitechnischen Anlagen, die weiteren Vorteile einer außerordentlich leichten Abtrennbarkeit des Extraktionsmittels, da das $CO_2$ bei Druckentlastung gasförmig entweicht, sowie der völligen Unschädlichkeit dieses Extraktionsmittels, das im übrigen umweltverträglich ist. Weitere Vorteile der $CO_2$-Extraktion bestehen darin, daß die Aromaquelle bei diesem Extraktionsverfahren keinerlei thermischer Belastung ausgesetzt wird, so daß keine unerwünschten sekundären chemischen Reaktionen eintreten können, durch welche die originale Aromazusammensetzung verändert werden könnte, und im übrigen auch höhersiedende Komponenten extrahiert werden. Die $CO_2$-Extraktion ist auf zahlreichen technischen Gebieten bei der Herstellung von Extrakten bzw. Konzentraten üblich, beispielsweise bei der Herstellung von Hopfenextrakten. Hierin liegt ein weiterer Vorteil dieser Extraktionsmethode, da die Anlagen zur $CO_2$-Extraktion von Hopfen, die nur während eines kurzen Zeitraums nach der Hopfenernte effektiv genutzt werden, auch zur Herstellung von Roggen- bzw. Roggenbrotaroma herangezogen werden können, wodurch sich besondere wirtschaftliche Vorteile ergeben.

Nachdem es für viele Anwendungsfälle nicht zwingend darauf ankommt, sämtliche in einem Extrakt enthaltenen Aromakomponenten in das zu aromatisierende Produkt einzubringen, kann der in der obigen Weise erhältliche erfindungsgemäße Extrakt auch einer Fraktionierung unterzogen werden, wobei durch entsprechende Wahl der Fraktionen sowohl die leichter flüchtigen bzw. leichtestflüchtigen Komponenten als auch die schwerer flüchtigen bzw. schwerstflüchtigen Aromakomponenten voneinander getrennt und isoliert werden können, die dann getrennt oder in Form beliebiger Abmischungen zur Aromatisierung verwendet werden können. Die Fraktionierung kann unter Ausnutzung der unterschiedlichen Flüchtigkeit bzw. Dampfdrucke der Aromakomponenten durchgeführt werden, beispielsweise durch Destillation, Rektifikation oder Schlepperdestillation mit geeigneten Lösungsmitteln. Alternativ können auch die unterschiedlichen Sorptionseigenschaften der Komponenten zur Fraktionierung herangezogen werden, die dann beispielsweise durch Säulenchromatographie, präparative Gaschromatographie oder Hochdruck-Flüssigkeitschromatographie (HPLC) vorgenommen werden kann. Alternativ dazu kann auch eine selektive Extraktion bestimmter Verbindungsgruppen vorgenommen werden.

Der resultierende Extrakt kann unmittelbar als solcher oder auch nach geeigneter Fraktionierung zur Aromatisierung von Substraten beliebiger Art verwendet werden, ggfs. nach Versetzen mit Flüssigkeiten wie Wasser und/oder Ethanol, ggfs. nach Zugabe eines Dispergiermittels oder Emulgators.

Die in der oben angegebenen Weise erhältlichen erfindungsgemäßen Brotaromen bzw. Extrakte stellen mehr oder weniger dunkel gefärbte, pastose Produkte dar.

Sowohl die Technologie der Herstellung der Aromaquelle, beispielsweise der Brotbereitung, als auch das angewandte Extraktionsverfahren beeinflussen die resultierende Zusammensetzung des Brotaromas. Die analytisch feststellbaren Unterschiede, die insbesondere die Mengenanteile einiger Aromakomponenten betreffen, führen jedoch nicht zu relevanten Aromaunterschieden, da in allen Fällen ein ausgeprägter und typischer Roggenbrotcharakter festzustellen ist.

In der oben angegebenen Weise hergestellte Extrakte aus Roggenbrotkruste weisen folgende in Tabelle 2 aufgelistete Aromakomponenten auf, welche als die wichtigsten Komponenten anzusehen sind:

Tabelle 2

Hexanal,
3-Penten-2-on,
Butanol,
2-Heptanon,
Pyridin,
Heptanal,
2-Methylbutanol,
3-Methylbutanol,
2-Methylbutanal,
3-Methylbutanal,
2-Pentylfuran,
Pentanol,
Pentanal,
2-Methyltetrahydrofuran-3-on,
2-Methylpyrazin,
Acetoin,
1-Hydroxyaceton,
Methyllactat,
2,3-Dimethylpyrazin,
2,5-Dimethylpyrazin,
2,6-Dimethylpyrazin,
2-Ethylpyrazin,
3-Hydroxypentan-2-on,
Ethyllactat,
2-Hydroxypentan-3-on,
Maltol,
Vanillin,
Hexanol,
2-Ethyl-6-methylpyrazin,
2-Ethyl-5-methylpyrazin,
Nonanal,
2-Methylfuran-3(2H)-on,
Trimethylpyrazin,
2-Ethyl-3-methylpyrazin, 5-Methylfuran-2(3H)-on,
2(E)-Octenal,
Essigsäure,
2-Ethyl-3,6-dimethylpyrazin,
3-Methylthiopropanal (Methional),
Furfural,
1-Octen-3-ol,
2-Ethyl-3,5-dimethylpyrazin,
Acetonylacetat,
2,5-Dimethylfuran-3(2H)-on,
4-Heptenal,
2-Methylpropanal,
2-Acetylpyrazin,
2-Acetylfuran,
Benzaldehyd,
5-Methylfurfural,
2-Propionylfuran,
2-Acetylpyridin,
1-Methyl-2-formylpyrrol,
5-Methyl-6,7-dihydro-5H-cyclopentapyrazin,
2-Phenylacetaldehyd,
Furfurol,
3-Methylbuttersäure,
2-Thiophencarboxaldehyd,
1-Acetonylpyrrol,
5-Methyl-2-furfurol,
2,4(E,E)-Decadienal,
Hexansäure,
2-Phenylethanol,
2-Acetylpyrrol,
2-Furylpyrazin,
2-Formylpyrrol,
5-Pentyltetrahydrofuran-2-on,
2-(2-Furyl)-5-methylpyrazin,
2-(2-Furyl)-6-methylpyrazin,
Octansäure,
2-Pyridinmethanol,
Nonansäure,
4-Vinylguajacol,
1-Furfuryl-2-formylpyrrol,
Decansäure und
Dodecansäure.

Aufgrund der Kenntnis der Hauptaromakomponenten ist es erfindungsgemäß möglich, Kompositionen synthetischer, naturidentischer Brotaromakomponenten herzustellen, wobei dann eine Extraktion von natürlichen bzw. in natürlicher Weise hergestellten Aromaquellen entbehrlich ist, da die oben aufgelisteten Komponenten sämtlich entweder im Handel erhältlich oder durch Synthese leicht herstellbar sind. Die erfindungsgemäßen Kompositionen können folglich aus den in den Tabellen 1 und 2 aufgelisteten Verbindungen frei kombiniert werden, wodurch sich gegenüber den Extrakten in weitem Maße Modifizierungsmöglichkeiten des Aromas ergeben.

Die Erfindung betrifft dementsprechend auch Brotaromen, die eine Komposition der Roggenbrotaromakomponenten der Tabelle 2 darstellen, ggfs. noch unter Zusatz weiterer Aromastoffe, die insbesondere aus den Substanzen der Tabelle 1 ausgewählt sind.

Die Erfindung umfaßt ferner auch Verfahren zur Aromatisierung von beliebigen Substraten und besonders von Nahrungs- und Genußmitteln, insbesondere Getränken, sowie etwa von pharmazeutischen Hilfs- und/oder Trägerstoffen mit Brotaroma und insbesondere Roggenbrotaroma. Diese Verfahren sind dadurch gekennzeichnet, daß das Brotaroma, das entweder durch Extraktion oder durch freie Komposition relevanter Aromakomponenten hergestellt wurde, auf das zu aromatisierende Produkt aufgebracht bzw. in das zu aromatisierende Produkt eingebracht wird. Die Aromatisierung kann infolgedessen durch Zusatz, Vermischen bzw. Einmischen des Brotaromas, durch Tränken oder durch Imprägnieren des zu aromatisierenden Produkts mit dem Brotaroma, durch Sorbieren des Brotaromas auf dem zu aromatisierenden Produkt und/oder durch Dispergieren im zu aromatisierenden Produkt erfolgen. Aromakomponenten können ferner auch durch chemische Bindung über reaktive Gruppen an Trägermaterialien oder darin enthaltene Komponenten wie Proteine, Cellulosederivate, Stärke, etc. gebunden werden.

Aromatisierungen von Nahrungs - und Genußmitteln sowie anderen Substraten sind insbesondere in der Lebensmitteltechnologie geläufig. Die erfindungsgemäßen Aromatisierungen können nach gleichen Methoden und unter Verwendung gleicher, üblicher Vorrichtungen durchgeführt werden.

Beispiele für Substrate, die mit den erfindungsgemäßen Brotaromen aromatisiert werden können, sind Nahrungsmittel und Nährmittel beliebiger Art, beispielsweise auf der Basis von Gemüsen, Getreide und Getreideprodukten, ferner Hülsenfrüchte, Kartoffeln, Kartoffelprodukte wie Chips udgl., Backprodukte wie Brot und Feingebäck, Milchprodukte wie Käse, Käsezubereitungen, Joghurt, Milchmischgetränke und Sauermilchgetränke und entsprechende Zubereitungen; Sojaprodukte, besonders Sojaproteinprodukte wie Tofu udgl., Desserts, Suppen, Soßen, Fertiggerichte beliebiger Art, Gewürze und Würzmittel, Bonbons, Kaugummi, Kindernahrung, Träger und Excipientien für pharmazeutische Mittel sowie etwa diätetische Nahrungsmittel.

Durch die Aromatisierung von diätetischen Nahrungsmitteln oder Nahrungsmittelzusätzen, bei denen einer Geschmacksverbesserung auch aus medizinischer Hinsicht besondere Bedeutung zukommt, kann die Akzeptanz solcher Produkte beim Verbraucher verbessert werden. Gleiches gilt für die Aromatisierung von pharmazeutischen Mitteln beliebiger galenischer Formulierung sowie pharmazeutischen Hilfs- bzw. Trägerstoffen, die für pharmazeutische Formulierungen herangezogen werden, da hierdurch insbesondere oral verwendbaren Arzneimitteln ein die Akzeptanz verbessernder Brotgeschmack verliehen werden kann.

Es ist prinzipiell auch möglich, die erfindungsgemäßen Brotaromen in unveränderter Form zu verwenden, beispielsweise als Würzmittel für Speisen und Getränke. Solche Würzmittel können auch Dispersionen oder auf einem geeigneten Träger sorbierte Brotaromen sein.

Ein wichtiger Aspekt der Erfindung ist die Aromatisierung von Getränken mit Brotaroma und insbesondere Roggenbrotaroma. Sie wird generell so vorgenommen, daß ein Grundgetränk in einem geeigneten Stadium seines Herstellungsprozesses oder ein bereits fertiggestelltes Grundgetränk mit erfindungsgemäßem Brotaroma aromatisiert wird. Die Aromatisierung kann bei Getränken zumeist durch einfaches Einmischen vorgenommen werden. Erforderlichenfalls können Zusätze wie Konservierungsmittel, Dispergiermittel oder Emulgatoren zugesetzt werden.

Als Grundgetränke kommen beliebige alkoholische, alkoholarme und alkoholfreie Getränke mit oder ohne Kohlensäuregehalt in Frage.

Als Grundgetränke sind erfindungsgemäß Biere beliebiger Art besonders geeignet. Da das Grundbier durch die Aromatisierung einen je nach Menge des Zusatzes mehr oder weniger stark ausgeprägten Roggenbrotgeschmack und -geruch erhält, können aus beliebigen Stärkequellen hergestellte Biere sowie auch Biere herangezogen werden, die nicht aus Malzen, sondern aus Zuckerlösungen mit entsprechendem Zusatz von Aminosäuren und Hydrolasen und Proteasen hergestellt sind. Derartige Biere sind dem Fachmann ebenfalls geläufig. Da die Aromatisierung zu einem ausgeprägten Aroma führt, eignen sich als Grundgetränke besonders solche Biere und bierartigen Getränke, die sich nicht durch einen besonderen, vom Roggenaroma abweichenden Eigengeschmack auszeichnen. Hier sind besonders alkoholarme und alkoholfreie Biere sowie Leichtbiere und Malzbiere auf der Basis von Gersten- und/oder Weizenmalz, ferner Gemische von Bier mit Limonaden udgl. zu nennen.

Bei Bieren hat die erfindungsgemäße Aromatisierung den Vorteil, daß Biere mit besonders günstiger Schaumbildung und Schaumstabilität als Grundbiere herangezogen werden können.

Das erfindungsgemäße Aromatisierungsverfahren kann entsprechend auch besonders vorteilhaft zur Aromaverstärkung von Roggenbier verwendet werden, das unter teilweiser bzw. ausschließlicher Verwendung von Roggenmalz hergestellt ist, beispielsweise gemäß DE 39 27 315 oder DE 38 28 786. Als Grundgetränke kommen ferner auch beispielsweise Limonaden, Malzgetränke, Malzlimonaden, Zuckerlösungen, Melasselösungen, Obstsäfte und Obstsaftzubereitungen, Gemüsesäfte und Gemüsesaftzubereitungen, Fruchtsäfte und Fruchtsaftzubereitungen, Milch und Milchmischgetränke, Sauermilch und Sauermilchgetränke, Joghurtzubereitungen etc. sowie auch Suppen, Wein und weinhaltige Mischgetränke, Korn, Schnaps, Wodka, Whisky oder etwa isotonische Salzlösungen in Frage. Das Grundgetränk kann entsprechend alkoholfrei, alkoholarm oder alkoholhaltig sein bzw. zu den Spirituosen gehören; es kann ferner vergoren oder unvergoren sein und Kohlensäure enthalten.

Ein weiteres besonders geeignetes Grundgetränk sind Bierwürzen, die in beliebiger Weise hergestellt sein können, also beispielsweise aus Gemischen von Gersten- und Weizenmalz, ggfs. auch unter Mitverwendung von Roggenmalz, ferner auch Bierwürzen, die unter überwiegender oder ausschließlicher Verwendung von Roggenmalz hergestellt sind. Bei diesen Bierwürzen, die, wie oben erwähnt, auch als Aromaquelle dienen können, liegt bereits eine Grundaromatisierung vor, die durch die erfindungsgemäße Aromatisierung noch weiter verstärkt werden kann. Als Bierwürzen für das Grundgetränk kommen entsprechend in beliebiger Weise hergestellte Bierwürzen in Frage, d.h. Bierwürzen, die aus Malzen bzw. Malzgemischen beliebiger Cerealien wie Gerste, Weizen, Roggen, Dinkel, Reis, Mais, Sorghum etc. als Stärkequelle hergestellt sind, ferner auch Bierwürzen, die durch Maischen einer ungemalzten Stärkequelle mit Gehalt an Proteinen oder Aminosäuren hergestellt sind, die durch Verwendung hydrolytischer und proteolytischer Enzyme aufgeschlossen wurde, ferner auch Bierwürzen aus einer nicht auf Getreide beruhenden Stärkequelle (wie Erbsenmehl, Topinambur udgl.), die in an sich bekannter Weise, ggfs. unter Zusatz von Enzymen und Aminosäuren, aufgeschlossen wurde, schließlich auch Bierwürzen, die aus Zuckern oder Zuckergemischen wie etwa aus Melasse unter Zusatz von Aminosäuren erhalten sind.

Im Fall von durch Gärung erzeugten Grundgetränken wird das Brotaroma vorteilhaft nach dem Hauptgärungsschritt bzw. nach einer eventuellen Nachgärung zugesetzt; falls beim Herstellungsprozeß ein Erhitzungsschritt vorgenommen wird (Sud bei der Bierherstellung, Pasteurisierung, Sterilisation) wird das erfindungsgemäße Brotaroma vorteilhaft nach diesem Erhitzungsschritt zugesetzt, um Sekundärreaktionen und Aromaveränderungen zu vermeiden.

Das erfindungsgemäße Aromatisierungsverfahren eignet sich besonders auch zur Aromaverstärkung bei Kwass und kwassartigen Getränken. Kwass stellt bekanntlich ein russisches Nationalgetränk dar, das durch eine unterbrochene Milchsäuregärung und alkoholische Gärung der Extraktivstoffe einer Maische erhalten wird, die aus Brotstücken mit und ohne Malzzusatz und Zucker oder unmittelbar aus einem Gemisch von Roggenmalz, Gerstenmalz und Roggenmehl hergestellt wird. Die hierbei verwendeten Kwassbrote werden speziell zu diesem Zweck aus einem Gemisch von Roggenmehl, Gerstenmalz und Roggenvollkornmehl gebacken. Die Maischeherstellung geschieht durch Auszug der Extraktivstoffe aus den Kwassbroten mit heißem Wasser und Abtrennung der unlöslichen Bestandteile. Die Vergärung der Maische erfolgt nach Zusatz von Hefe sowie von Milchsäurebakterien und Zucker. Zur Erzeugung eines typischen Brotaromas werden das Roggenmalz und das Roggenmehl vor dem Maischen einem Röstschritt unterzogen. Aufgrund des sehr typischen, vom klassischen Biergeschmack deutlich verschiedenen Geschmacks und der vorhandenen Brotnote eignen sich Kwass und kwassartige Getränke entsprechend besonders günstig auch für die erfindungsgemäße Aromatisierung. Unter kwassartigen Getränken werden hierbei Getränke verstanden, bei deren Herstellung eine Milchsäuregärung durchgeführt wird, und zwar unabhängig oder simultan mit einer Hefegärung zur Alkoholerzeugung.

Die Menge an Extrakt bzw. einer Komposition von Roggenbrotaromakomponenten, die dem zu aromatisierenden Substrat zugegeben wird, hängt von der angestrebten Intensität der Aromatisierung und insbesondere der Art des zu aromatisierenden Produkts ab. Die zu verwendende Menge kann durch einfache Versuche bei sensorischer bzw. organoleptischer Beurteilung leicht ermittelt werden.

## Beispiel

Aus 100 g Roggenbrotkruste läßt sich nach den oben angegebenen Extraktionsverfahren eine Extraktmenge bzw. Brotaromamenge gewinnen, wie sie aus etwa 0,3 l einer ausschließlich aus Roggenmalz hergestellten Bierwürze extrahierbar ist. Eine solche Bierwürze, die erfindungsgemäß als Aromaquelle herangezogen werden kann, weist entsprechend ein stark ausgeprägtes Roggenbrotaroma auf, so daß diese Aromamenge pro Liter bzw. pro Kilogramm des zu aromatisierenden Produkts in der Regel einer für die Praxis günstigen oberen Grenzmenge entspricht. Demgegenüber können auch weitaus geringere Aromamengen angewandt werden, die etwa nur 1 bis 10 % der angegebenen Menge betragen.

Die erfindungsgemäßen Brotaromen können in vorteilhafter Weise auch zur Aromaverstärkung von Backwaren wie Brot, Brötchen, Brezeln, Salzgebäck, Feingebäck udgl. herangezogen werden, besonders zur Aromatisierung von solchen Backwaren, bei denen kein Roggenmehl oder Roggenkorn oder nur sehr geringe Mengen davon verwendet wurden. Auch hier lassen sich interessante neue organoleptische Eigenschaften bei herkömmlichen Grundbackwaren erzielen.

Die erfindungsgemäßen Brotaromazusammensetzungen, die durch Extraktion wie auch durch freie Komposition erhältlich sind, sind einfach zu standardisieren, was für bestimmte Anwendungsfälle, beispielsweise in der Getränketechnologie, besonders vorteilhaft ist, da z.B. die Extraktion unter standardisierten Bedingungen durchgeführt werden kann und auch die Aromaquellen, insbesondere Backwaren, sehr einfach zu standardisieren bzw. in gleichbleibender Qualität erhältlich sind. Daher lassen sich in reproduzierbarer

15

EP 0 413 368 B1

Weise aromatisierte Produkte gleichbleibenden Aromas und gleichbleibender Qualität herstellen.

**Patentansprüche**

1. Verfahren zur Herstellung von Brotaroma durch Extraktion von Brot oder Brotkruste als Aromaquelle mit einem Extraktionsmittel und erforderlichenfalls Abtrennung des Extraktionsmittels,
   **gekennzeichnet durch**
   Verwendung eines organischen Lösungsmittels oder eines Gemisches organischer Lösungsmittel als Extraktionsmittel.

2. Verfahren zur Herstellung von Brotaroma durch Extraktion einer Aromaquelle mit einem Extraktionsmittel und erforderlichenfalls Abtrennung des Extraktionsmittels,
   gekennzeichnet durch
   - Verwendung von einem Back- oder Röstvorgang unterzogenem Getreide oder Getreidemalz oder einer aus Getreidemalz hergestellten Bierwürze als Aromaquelle
     und
   - Verwendung eines organischen Lösungsmittels oder eines Gemisches organischer Lösungsmittel als Extraktionsmittel.

3. Verfahren zur Herstellung von Brotaroma durch Extraktion von Brot oder Brotkruste als Aromaquelle mit einem Extraktionsmittel und erforderlichenfalls Abtrennung des Extraktionsmittels,
   gekennzeichnet durch
   Verwendung von flüssigem, überkritischem $CO_2$ als Extraktionsmittel.

4. Verfahren zur Herstellung von Brotaroma durch Extraktion einer Aromaquelle mit einem Extraktionsmittel und erforderlichenfalls Abtrennung des Extraktionsmittels,
   gekennzeichnet durch
   - Verwendung von einem Back- oder Röstvorgang unterzogenem Getreide oder Getreidemalz oder einer aus Getreidemalz hergestellten Bierwürze als Aromaquelle
     und
   - Verwendung von flüssigem, überkritischem $CO_2$ als Extraktionsmittel.

5. Verfahren nach den Ansprüchen 1 bis 4 zur Herstellung von Roggenbrotaroma, gekennzeichnet durch Extraktion von Roggenbrot, Roggenbrotkruste, einem Back- oder Röstvorgang mit oder ohne Verwendung von Hefe oder anderen Backtriebmitteln unterzogenem , Roggen und/oder Roggenmalz oder einer aus ausschließlich Roggenmalz hergestellten Bierwürze als Aromaquelle.

6. Verfahren nach Anspruch 1 oder 2, gekennzeichnet durch Extraktion der Aromaquelle mit Pentan-Dichlormethan-Gemischen, Diethylether und/oder Ethanol.

7. Verfahren nach den Ansprüchen 1 bis 6, dadurch gekennzeichnet, daß die Aromaquelle vor der Extraktion einer Wasserdampfdestillation unterworfen und das dabei erhaltene Wasserdampfdestillat extrahiert wird oder daß die Aromaquelle durch simultane Wasserdampfdestillation-Extraktion (SDE) extrahiert wird.

8. Verfahren nach den Ansprüchen 1 bis 7, gekennzeichnet durch Fraktionierung des bei der Extraktion erhaltenen Extrakts durch Destillation, Rektifikation, Schlepperdestillation, Säulenchromatographie, präparative Gaschromatographie, Hochdruck-Flüssigkeitschromatographie und/oder selektive Extraktion.

9. Verfahren nach Anspruch 8, gekennzeichnet durch Fraktionierung des bei der Extraktion erhaltenen Extrakts unter Gewinnung der leichter flüchtigen bzw. der leichtestflüchtigen und/oder der schwerer flüchtigen bzw. schwerstflüchtigen Aromakomponenten.

10. Brotaroma, erhältlich nach dem Verfahren eines der Ansprüche 1 bis 9 in lösungsmittelfreier Form oder als Lösung bzw. Dispersion in einem Lösungsmittel.

11. Brotaroma nach Anspruch 10, dadurch gekennzeichnet, daß es als Lösung bzw. Dispersion in Wasser und/oder Ethanol vorliegt.

16

**12.** Brotaroma, dadurch gekennzeichnet, daß es eine künstliche Komposition von nach einem Verfahren gemäß den Ansprüchen 1 bis 9 erhältlichen Brotaromakomponenten darstellt.

**13.** Brotaroma nach Anspruch 12, dadurch gekennzeichnet, daß es eine Komposition synthetischer, naturidentischer Brotaromakomponenten darstellt.

**14.** Brotaroma nach Anspruche 12 oder 13, dadurch gekennzeichnet, daß es eine Komposition mindestens folgender Brotaromakomponenten darstellt:
Hexanal, 3-Penten-2-on, Butanol, 2-Heptanon, Pyridin, Heptanal, 2-Methylbutanol, 3-Methylbutanol, 2-Methylbutanal, 3-Methylbutanal, 2-Pentylfuran, Pentanol, Pentanal, 2-Methyltetrahydrofuran-3-on, 2-Methylpyrazin, Acetoin, 1-Hydroxyaceton, Methyllactat, 2,3-Dimethylpyrazin, 2,5-Dimethylpyrazin, 2,6-Dimethylpyrazin, 2-Ethylpyrazin, 3-Hydroxypentan-2-on, Ethyllactat, 2-Hydroxypentan-3-on, Maltol, Vanillin, Hexanol, 2-Ethyl-6-methylpyrazin, 2-Ethyl-5-methylpyrazin, Nonanal, 2-Methylfuran-3(2H)-on, Trimethylpyrazin, 2-Ethyl-3-methylpyrazin, 5-Methylfuran-2(3H)-on, 2(E)-Octenal, Essigsäure, 2-Ethyl-3,6-dimethylpyrazin, 3-Methylthiopropanal (Methional), Furfural, 1-Octen-3-ol, 2-Ethyl-3,5-dimethylpyrazin, Acetonylacetat, 2,5-Dimethylfuran-3(2H)-on, 4-Heptenal, 2-Methylpropanal, 2-Acetylpyrazin, 2-Acetylfuran, Benzaldehyd, 5-Methylfurfural, 2-Propionylfuran, 2-Acetylpyridin, 1-Methyl-2-formylpyrrol, 5-Methyl-6,7-dihydro-5H-cyclopentapyrazin, 2-Phenylacetaldehyd, Furfurol, 3-Methylbuttersäure, 2-Thiophencarboxaldehyd, 1-Acetonylpyrrol, 5-Methyl-2-furfurol, 2,4(E,E)-Decadienal, Hexansäure, 2-Phenylethanol, 2-Acetylpyrrol, 2-Furylpyrazin, 2-Formylpyrrol, 5-Pentyltetrahydrofuran-2-on, 2-(2-Furyl)-5-methylpyrazin, 2-(2-Furyl)-6-methylpyrazin, Octansäure, 2-Pyridinmethanol, Nonansäure, 4-Vinylguajacol, 1-Furfuryl-2-formylpyrrol, Decansäure und Dodecansäure.

**15.** Brotaroma nach den Ansprüchen 12 bis 14, dadurch gekennzeichnet, daß es eine Komposition mindestens folgender Brotaromakomponenten darstellt:
Hexanal, 3-Penten-2-on, 2-Methylbutanol, 3-Methylbutanol, 2-Pentylfuran, Pentanol, 2-Methyltetrahydrofuran-3-on, 2-Methylpyrazin, Acetoin, 1-Hydroxyaceton, 2,3-Dimethylpyrazin, 2,5-Dimethylpyrazin, 2,6-Dimethylpyrazin, Ethyllactat, Maltol, Vanillin, Hexanol, 2-Methylfuran-3(2H)-on, 2-Ethyl-3-methylpyrazin, 2(E)-Octenal, 3-Methylthiopropanal (Methional), 2-Ethyl-3,5-dimethylpyrazin, 2,5-Dimethylfuran-3(2H)-on, 2-Acetylfuran, Benzaldehyd, 2-Phenylacetaldehyd, Furfurol, 5-Methyl-2-furfurol, 2,4(E,E)-Decadienal, Hexansäure, 2-Phenylethanol, 2-Acetylpyrrol, 5-Pentyltetrahydrofuran-2-on, Octansäure, 4-Vinylguajacol, 1-Furfuryl-2-formylpyrrol, Decansäure und Dodecansäure.

**16.** Verfahren zur Aromatisierung von Substraten, einschließlich Nahrungs- und Genußmittel sowie pharmazeutischer Hilfs- und/oder Trägerstoffe, mit Brotaroma, dadurch gekennzeichnet, daß Brotaroma nach einem der Ansprüche 10 bis 15
- auf das zu aromatisierende Substrat aufgebracht,
- auf dem zu aromatisierenden Substrat sorbiert,
- in das zu aromatisierende Substrat eingebracht und/oder
- im zu aromatisierenden Substrat dispergiert

wird.

**17.** Verfahren nach Anspruch 16, dadurch gekennzeichnet, daß als Substrate Gemüse, Nährmittel, Getreide und Getreideprodukte, Hülsenfrüchte, Backprodukte wie Brot und Feingebäck, Milchprodukte, wie Käse, Käsezubereitungen, Joghurt und Milchmischgetränke, Sojaprodukte und Sojaproteinprodukte, Desserts, Suppen, Soßen, Fertiggerichte, Gewürze und Würzmittel, Bonbon, Kaugummi und Kindernahrung sowie Träger und Excipientien für pharmazeutische Mittel verwendet werden.

**18.** Verfahren nach Anspruch 16 oder 17 zum Aromatisieren von Getränken mit Brotaroma, dadurch gekennzeichnet, daß ein Grundgetränk in einem geeigneten Stadium seines Herstellungsprozesses oder ein fertiggestelltes Grundgetränk mit Brotaroma nach einem der Ansprüche 10 bis 15 aromatisiert wird.

**19.** Verfahren nach Anspruch 18, dadurch gekennzeichnet, daß ein Grundgetränk aromatisiert wird, das unter alkoholischen, alkoholarmen und alkoholfreien Getränken mit oder ohne Kohlensäuregehalt ausgewählt ist.

**20.** Verfahren nach Anspruch 18 oder 19, dadurch gekennzeichnet, daß das Grundgetränk ausgewählt ist unter Bierwürzen aus beliebigen Stärkequellen, alkoholhaltigen, alkoholarmen und alkoholfreien Bieren, Leichtbieren, Kwass und kwassartigen Getränken, Gemischen von Bier mit Limonaden, Obst- und Fruchtsäften, Zuckerlösungen, Melasselösungen, Obstsäften und Obstsaftzubereitungen, Gemüsesäften und Gemüsesaftzubereitungen, Fruchtsäften und Fruchtsaftzubereitungen, Limonaden, Malzgetränken, Milch und Milchmischgetränken, Sauermilch und Sauermilchmischgetränken, Joghurtzubereitungen, Suppen, Wein und weinhaltigen Mischgetränken, Korn, Schnaps, Wodka, Whisky, Likören sowie isotonischen Salzlösungen.

**21.** Mit Brotaroma aromatisierte Substrate, einschließlich Getränke sowie anderer Nahrungs- und Genußmittel, erhältlich nach dem Verfahren eines der Ansprüche 16 bis 20.

**22.** Getränke mit Brotaroma nach Anspruch 21, gekennzeichnet durch ein Grundgetränk, das ausgewählt ist unter

- Bierwürzen aus beliebigen Malzen bzw. Malzgemischen als Stärkequelle, die durch Maischen erhalten sind, ggfs. mit einem beliebigen Anteil an bzw. aus ausschließlich Roggenmalz, sowie daraus durch Vergärung hergestellten ober- und untergärigen Bieren;
- Bierwürzen, die durch Maischen einer ungemalzten, zerkleinerten Stärkequelle mit Gehalt an Proteinen oder Aminosäuren hergestellt sind, die hydrolytische und proteolytische Enzyme enthält, sowie daraus durch Vergärung hergestellten ober- und untergärigen Bieren;
- Bierwürzen, die aus einer nicht auf Getreide beruhenden Stärkequelle unter Zusatz von Enzymen und ggfs. von Aminosäuren und Maischen hergestellt sind, sowie daraus durch Vergärung hergestellten ober- und untergärigen Bieren;
- Bierwürzen, die aus Zuckern oder Zuckergemischen unter Zusatz von Aminosäuren erhalten sind, sowie daraus durch Vergärung hergestellten ober- und untergärigen Bieren;
- Kwass und kwassartigen Getränken.

**23.** Aromatisierte Substrate mit Brotaroma, einschließlich Getränke sowie andere Nahrungs- und Genußmittel, nach Anspruch 21 oder 22, gekennzeichnet durch einen Gehalt an Brotaroma pro Liter bzw. pro Kilogramm, welcher der aus etwa 1 bis 100 g und vorzugsweise etwa 10 bis 100 g Brotkruste bzw. aus etwa 3 bis 300 ml und vorzugsweise etwa 30 bis 300 ml einer aus ausschließlich Roggenmalz hergestellten Bierwürze extrahierbaren Extraktmenge bzw. Brotaromamenge entspricht.

**24.** Verwendung der Brotaromen nach einem der Ansprüche 10 bis 15 zur Aromatisierung von Getränken und anderen Nahrungs- und Genußmitteln sowie von pharmazeutischen Mitteln und Hilfs- und/oder Trägerstoffen.

**Claims**

**1.** Method for preparing bread flavor by extraction of bread or bread crust as flavor source with an extracting agent, and, if required, separation of the extracting agent,
characterized by
use of an organic solvent or a mixture of organic solvents as extracting agent.

**2.** Method for preparing bread flavor by extraction of a flavor source with an extracting agent, and, if required, separation of the extracting agent,
characterized by

- use of a cereal or a cereal malt which were subjected to a a baking or roasting operation or of a wort obtained from a cereal malt as flavor source,
  and
- use of an organic solvent or a mixture of organic solvents as extracting agent.

**3.** Method for preparing bread flavor by extraction of bread or bread crust as flavor source with an extracting agent, and, if required, separation of the extracting agent,
characterized by
use of liquid, supercritical $CO_2$ as extracting agent.

4. Method for preparing bread flavor by extraction of a flavor source with an extracting agent, and, if required, separation of the extracting agent,
characterized by
- use of a cereal or a cereal malt which were subjected to a baking or roasting operation or of a wort obtained from a cereal malt as flavor source,
and
- use of liquid, supercritical $CO_2$ as extracting agent.

5. Method according to claims 1 to 4 for preparing rye-bread flavor, characterized by extraction of rye-bread, rye-bread crust, rye and/or rye malt which were subjected to a baking or roasting operation with or without use of yeast or other baking expanding agents, or of a wort obtained from solely rye malt as flavor source.

6. Method according to claim 1 or 2, characterized by extraction of the flavor source with pentan - dichloromethane mixtures, diethyl ether and/or ethanol.

7. Method according to claims 1 to 6, characterized in that before the extraction the flavor source is subjected to a steam distillation and the steam distillate obtained thereby is extracted, or the flavor source is extracted by simultaneous steam distillation extraction (SDE).

8. Method according to claims 1 to 7, characterized by fractionation of the extract obtained from the extraction by distillation, rectification, entrainment distillation, column chromatography, preparative gas chromatography, high-pressure liquid chromatography and/or selective extraction.

9. Method according to claim 8, characterized by fractionation of the extract obtained from the extraction with recovery of the flavor components of higher or highest volatility, respectively, and/or the flavor components of lower or lowest volatility, respectively.

10. Bread flavor, obtainable according to the method of one of claims 1 to 9 in solvent-free form or in the form of a solution or dispersion, respectively, in a solvent.

11. Bread flavor according to claim 10, characterized in that it is present in the form of a solution or dispersion, respectively, in water and/or ethanol.

12. Bread flavor, characterized in that it represents an artificial composition of bread flavor components obtainable according to a method in accordance with claims 1 to 9.

13. Bread flavor according to claim 12, characterized in that it represents a composition of synthetic bread flavor components which are identical with the respective natural products.

14. Bread flavor according to claim 12 or 13, characterized in that it represents a composition of at least the following bread flavor components:
Hexanal, 3-penten-2-one, butanol, 2-heptanone, pyridine, heptanal, 2-methylbutanol, 3-methylbutanol, 2-methylbutanal, 3-methylbutanal, 2-pentylfuran, pentanol, pentanal, 2-methyltetrahydrofuran-3-one, 2-methylpyrazine, acetoin, 1-hydroxyacetone, methyl lactate, 2,3-dimethylpyrazine, 2,5-dimethylpyrazine, 2,6-dimethylpyrazine, 2-ethylpyrazine, 3-hydroxypentan-2-one, ethyl lactate, 2-hydroxypentan-3-one, maltol, vanillin, hexanol, 2-ethyl-6-methylpyrazine, 2-ethyl-5-methylpyrazine, nonanal, 2-methylfuran-3-(2H)-one, trimethylpyrazine, 2-ethyl-3-methylpyrazine, 5-methylfuran-2(3H)-one, 2(E)-octenal, acetic acid, 2-ethyl-3,6-dimethylpyrazine, 3-methylthiopropanol (methional), furfural, 1-octen-3-ol, 2-ethyl-3,5-dimethylpyrazine, acetonylacetate, 2,5-dimethylfuran-3(2H)-one, 4-heptenal, 2-methylpropanal, 2-acetylpyrazine, 2-acetylfuran, benzaldehyde, 5-methylfurfural, 2-propionylfuran, 2-acetylpyridine, 1-methyl-2-formylpyrrol, 5-methyl-6,7-dihydro-5H-cyclopentapyrazine, 2-phenylacetaldehyde, furfurol, 3-methylbutyric acid, 2-thiophenecarboxaldehyde, 1-acetonylpyrrol, 5-methyl-2-furfurol, 2,4(E,E)-decadienal, hexanoic acid, 2-phenylethanol, 2-acetylpyrrol, 2-furylpyrazine, 2-formylpyrrol, 5-pentyltetrahydrofuran-2-one, 2-(2-furyl)-5-methylpyrazine, 2-(2-furyl)-6-methylpyrazine, octanoic acid, 2-pyridinemethanol, pelargonic acid, 4-vinylguaiacol, 1-furfuryl-2-formylpyrrol, decanoic acid and dodecanoic acid.

**15.** Bread flavor according to claims 12 to 14, characterized in that it represents a composition of at least the following bread flavor components:

Hexanal, 3-penten-2-one, 2-methylbutanol, 3-methylbutanol, 2-pentylfuran, pentanol, 2-methyltetrahydrofuran-3-one, 2-methylpyrazine, acetoin, 1-hydroxyacetone, 2,3-dimethylpyrazine, 2,5-dimethylpyrazine, 2,6-dimethylpyrazine, ethyl lactate, maltol, vanillin, hexanol, 2-methylfuran-3(2H)-one, 2-ethyl-3-methylpyrazine, 2(E)-octenal, 3-methylthiopropanal (methional), 2-ethyl-3,5-dimethylpyrazine, 2,5-dimethylfuran-3(2H)-one, 2-acetylfuran, benzaldehyde, 2-phenylacetaldehyde, furfurol, 5-methyl-2-furfurol, 2,4(E,E)-decadienal, hexanoic acid, 2-phenylethanol, 2-acetylpyrrol, 5-pentyltetrahydrofuran-2-one, octanoic acid, 4-vinylguaiacol, 1-furfuryl-2-formylpyrrol, decanoic acid and dodecanoic acid.

**16.** Method for flavoring substrates, including foodstuffs and delicacies and pharmaceutical auxiliary materials and/or carriers, with bread flavor, characterized in that bread flavor according to one of claims 10 to 15

- is applied onto the substrate to be flavored,
- is sorbed on the substrate to be flavored,
- is incorporated into the substrate to be flavored and/or
- is dispersed in the substrate to be flavored.

**17.** Method according to claim 16, characterized in that vegetables, nutrients, cereals and cereal products, leguminous plants, baking products, such as bread and cookies, milk products, such as cheese, cheese preparations, yoghurt and milk mix beverages, soy bean products and soy protein products, desserts, soups, sauces, ready-to-serve meals, spices and seasonings, goodies, chewing gum and infant food and carriers and excipients for pharmaceutical compositions are used as substrates.

**18.** Method according to claim 16 or 17 for flavoring beverages with bread flavor, characterized by flavoring a base beverage in a suitable stage of the manufacturing process thereof or a finished base beverage with bread flavor according to one of claims 10 to 15.

**19.** Method according to claim 18, characterized in that a base beverage is flavored selected from alcoholic, low alcohol and non-alcoholic beverages with or without carbon dioxide content.

**20.** Method according to claim 18 or 19, characterized in that the base beverage is selected from worts from any starch source, alcoholic, low alcohol and non-alcoholic beers, light beers, kwass and kwass-like beverages, mixtures of beer with lemonades, fruit juices, sugar solutions, molasse solutions, fruit juices and fruit juice preparations, lemonades, malt beverages, milk and milk mix beverages, curdled milk and curdled milk mix beverages, yoghurt preparations, soups, wine and wine-containing mixed beverages, whisky, brandy, wodka, liqueurs and isotonic salt solutions.

**21.** Substrates flavored with bread flavor, including beverages and other foodstuffs and luxury food, obtainable according to the method of one of claims 16 to 20.

**22.** Beverages having bread flavor according to claim 21, characterized by a base beverage selected from

- worts obtained by mashing from any malt or malt mixture, respectively, optionally comprising any content of rye malt or exclusively consisting of rye malt, as starch source, and top- and bottom-fermented beers obtained therefrom by fermentation;
- worts obtained by mashing a non-malted crushed starch source comprising proteins or amino acids and hydrolytic and proteolytic enzymes, and top- and bottom-fermented beers obtained therefrom by fermentation;
- worts obtained by mashing a non-cereal starch source with addition of enzymes and optionally of amino acids, and top- and bottom-fermented beers obtained therefrom by fermentation;
- worts obtained from sugars or sugar mixtures with addition of amino acids, and top- and bottom-fermented beers obtained therefrom by fermentation;
- kwass and kwass-like beverages.

**23.** Substrates flavored with bread flavor, including beverages and other foodstuffs and luxury food, according to claim 21 or 22, characterized by a content of bread flavor per litre or per kilogramme, respectively, which corresponds to the amount of extract or bread flavor, respectively, which may be extracted from about 1 to 100 g and preferably about 10 to 100 g of bread crust or about 3 to 300 ml

EP 0 413 368 B1

and preferably about 30 to 300 ml of a wort made exclusively from rye malt.

**24.** Use of the bread flavors according to one of claims 10 to 15 for flavoring beverages and other foodstuffs and luxury food and pharmaceutical compositions and auxiliary materials and/or carriers therefor.

**Revendications**

**1.** Procédé de préparation d'arôme de pain par son extraction de pain ou de croûte de pain comme source d'arôme par un agent d'extraction et, le cas échéant, par séparation de l'agent d'extraction, caractérisé par l'utilisation d'un solvant organique ou d'un mélange de solvants organiques en tant qu'agent d'extraction.

**2.** Procédé de préparation d'arôme de pain par son extraction d'une source d'arôme par un agent d'extraction et, le cas échéant, par séparation de l'agent d'extraction, caractérisé par
- l'utilisation d'une céréale ou d'un malt de céréale soumis à un processus de cuisson au four ou de torréfaction, ou d'un moût de bière, préparé à partir de malt de céréale, comme source d'arôme et
- l'utilisation d'un solvant organique ou d'un mélange de solvants organiques comme agent d'extraction.

**3.** Procédé de préparation d'arôme de pain par son extraction de pain ou de croûte de pain comme source d'arôme par un agent d'extraction et, le cas échéant, par séparation de l'agent d'extraction, caractérisé par l'utilisation de $CO_2$ supercritique fluide comme agent d'extraction.

**4.** Procédé de préparation d'arôme de pain par son extraction d'une source d'arôme par un agent d'extraction et, le cas échéant, par séparation de l'agent d'extraction, caractérisé par
- l'utilisation d'une céréale ou d'un malt de céréale soumis à un processus de cuisson au four ou de torréfaction, ou d'un moût de bière, préparé à partir de malt de céréale, comme source d'arôme et
- l'utilisation de $CO_2$ supercritique fluide comme agent d'extraction.

**5.** Procédé selon les revendications 1 à 4 de préparation d'arôme de pain de seigle, caractérisé par son extraction de pain de seigle, de croûte de pain de seigle, de seigle et/ou de malt de seigle soumis à un procédé de cuisson au four ou de torréfaction avec ou sans utilisation de levure ou d'autres poudres à lever, ou d'un moût de bière, préparé exclusivement à partir de malt de seigle, comme source d'arôme.

**6.** Procédé selon la revendication 1 ou 2, caractérisé par l'extraction de la source d'arôme par des mélanges de pentane et de dichlorométhane, de l'éther diéthylique et/ou de l'éthanol.

**7.** Procédé selon les revendications 1 à 6, caractérisé en ce qu'on soumet la source d'arôme à un entraînement à la vapeur avant l'extraction et qu'on extrait le produit entraîné à la vapeur ainsi obtenu, ou en ce qu'on extrait la source d'arôme par entraînement à la vapeur et extraction simultanés (SDE).

**8.** Procédé selon les revendications 1 à 7, caractérisé par le fractionnement de l'extrait obtenu lors de l'extraction, par distillation, rectification, distillation hétéro-azéotrope, chromatographie sur colonne, chromatographie préparative en phase gazeuse, chromatographie liquide à haute pression et/ou extraction sélective.

**9.** Procédé selon la revendication 8, caractérisé par le fractionnement de l'extrait obtenu lors de l'extraction avec obtention des composants aromatiques relativement volatils ou les plus volatils et/ou des composants aromatiques relativement peu volatils, ou les moins volatils.

**10.** Arôme de pain pouvant être obtenu d'après le procédé selon l'une des revendications 1 à 9 sous une forme exempte de solvant ou sous forme de solution ou de dispersion dans un solvant.

**11.** Arôme de pain selon la revendication 10, caractérisé en ce qu'il existe en tant que solution ou que dispersion dans l'eau et/ou dans l'éthanol.

**12.** Arôme de pain caractérisé en ce qu'il représente une composition artificielle de composants aromatiques de pain pouvant être obtenus d'après un procédé selon les revendications 1 à 9.

**13.** Arôme de pain selon la revendication 12, caractérisé en ce qu'il représente une composition de composants aromatiques de pain synthétiques et artificiels.

**14.** Arôme de pain selon la revendication 12 ou 13, caractérisé en ce qu'il représente une composition comprenant au moins les composants aromatiques de pain suivants : hexanal, 3-pentène-2-one, butanol, 2-heptanone, pyridine, heptanal, 2-méthylbutanol, 3-méthylbutanol, 2-méthylbutanal, 3-méthylbutanal, 2-pentylfurane, pentanol, pentanal, 2-méthyltétrahydrofurane-3-one, 2-méthylpyrazine, acétoïne, 1-hydroxyacétone, lactate de méthyle, 2,3-diméthylpyrazine, 2,5-diméthylpyrazine, 2,6-diméthylpyrazine, 2-éthylpyrazine, 3-hydroxypentane-2-one, lactate d'éthyle, 2-hydroxypentane-3-one, maltol, vanilline, hexanol, 2-éthyl-6-méthylpyrazine, 2-éthyl-5-méthylpyrazine, nonanal, 2-méthylfurane-3(2H)-one, triméthylpyrazine, 2-éthyl-3-méthylpyrazine, 5-méthylfurane-2(3H)-one, 2(E)-octénal, acide acétique, 2-éthyl-3,6-diméthylpyrazine, 3-méthylthiopropanal (méthional), furfural, 1-octène-3-ol, 2-éthyl-3,5-diméthylpyrazine, acétate d'acétonyle, 2,5-diméthylfurane-3(2H)-one, 4-heptanal, 2-méthylpropanal, 2-acétylpyrazine, 2-acétylfurane, benzaldéhyde, 5-méthylfurfural, 2-propionylfurane, 2-acétylpyridine, 1-méthyl-2-formylpyrrole, 5-méthyl-6,7-dihydro-5H-cyclopentapyrazine, 2-phénylacétaldéhyde, furfurol, acide 3-méthylbutyrique, 2-thiophènecarboxaldéhyde, 1-acétonylpyrrol, 5-méthyl-2-furfurol, 2,4(E,E)-décadiénal, acide hexanoïque, 2-phényléthanol, 2-acétylpyrrole, 2-furylpyrazine, 2-formylpyrrole, 5-pentyltétrahydrofurane-2-one, 2-(2-furyl)-5-méthylpyrazine, 2-(2-furyl)-6-méthylpyrazine, acide octanoïque, 2-pyridineméthanol, acide nonanoïque, 4-vinylguaïacol, 1-furfuryl-2-formylpyrrole, acide décanoïque et acide dodécanoïque.

**15.** Arôme de pain selon les revendications 12 à 14, caractérisé en ce qu'il représente une composition comprenant au moins les composants aromatiques de pain suivants : hexanal, 3-pentène-2-one, 2-méthylbutanol, 3-méthylbutanol, 2-pentylfurane, pentanol, 2-méthyltétrahydrofurane-3-one, 2-méthylpyrazine, acétoïne, 1-hydroxyacétone, 2,3-diméthylpyrazine, 2,5-diméthylpyrazine, 2,6-diméthylpyrazine, lactate d'éthyle, maltol, vanilline, hexanol, 2-méthylfurane-3(2H)-one, 2-éthyl-3-méthylpyrazine, 2(E)-octénal, 3-méthylthiopropanal (méthional), 2-éthyl-3,5-diméthylpyrazine, 2,5-diméthylfurane-3(2H)-one, 2-acétylfurane, benzaldéhyde, 2-phénylacétaldéhyde, furfurol, 5-méthyl-2-furfurol, 2,4(E,E)-décadiénal, acide hexanoïque, 2-phényléthanol, 2-acétylpyrrole, 5-pentyltétrahydrofurane-2-one, acide octanoïque, 4-vinylguaïacol, 1-furfuryl-2-formylpyrrole, acide décanoïque et acide dodécanoïque.

**16.** Procédé d'aromatisation de substrats, y compris produits alimentaires et produits de consommation de luxe ainsi qu'adjuvants et/ou véhicules pharmaceutiques, par de l'arôme de pain, caractérisé en ce que l'arôme de pain, selon l'une des revendications 10 à 15,
- est disposé sur le substrat à aromatiser,
- est absorbé sur le substrat à aromatiser,
- est introduit dans le substrat à aromatiser et/ou
- est dispersé dans le substrat à aromatiser.

**17.** Procédé selon la revendication 16, caractérisé en ce qu'on utilise comme substrats des légumes, des produits alimentaires, des céréales et des produits à base de céréales, des légumineuses, des produits cuits au four comme le pain et les patisseries, des produits laitiers comme le fromage et des préparations à base de fromage, des yaourts et des boissons mélangées à base de lait, des produits à base de soja et des produits à base de protéines de soja, des desserts, des soupes, des sauces, des plats cuisinés, des épices et des condiments, des bonbons, des chewing-gums et des aliments pour enfants ainsi que des véhicules et des excipients pour produits pharmaceutiques.

**18.** Procédé selon la revendication 16 ou 17 d'aromatisation de boissons par de l'arôme de pain, caractérisé en ce qu'on aromatise une boisson de base à un stade approprié de son processus de fabrication, ou une boisson de base préparée, par un arôme de pain selon une des revendications 10 à 15.

**19.** Procédé selon la revendication 18, caractérisé en ce qu'on aromatise une boisson de base choisie parmi des boissons alcoolisées, pauvres en alcool ou sans alcool, avec ou sans acide carbonique.

**20.** Procédé selon la revendication 18 ou 19, caractérisé en ce qu'on choisit la boisson de base parmi des moût de bière provenant de sources quelconques d'amidon, des bières alcoolisées, pauvres en alcool ou sans alcool, des bières légères, du kwas ou des boissons du type kwas, des mélanges de bière et de limonade, des jus de fruits, des sirops de sucre, des sirops de mélasse, des jus de fruits et des préparations à base de jus de fruits, des jus de légumes et des préparations à base de jus de légumes, des limonades, des boissons maltées, du lait et des boissons mélangées à base de lait, du lait caillé et des boissons mélangées à base de lait caillé, des préparations à base de yaourt, des soupes, du vin et des boissons mélangées à base de vin, des eaux de vie de grains, du schnaps, de la wodka, du whisky, des liqueurs ainsi que des solutions salées isotoniques.

**21.** Substrats aromatisés par de l'arome de pain, y compris des boissons ainsi que d'autres produits alimentaires et des produits de consommation de luxe, pouvant être obtenus selon le procédé selon l'une des revendications 16 à 20.

**22.** Boissons ayant un arôme de pain selon la revendication 21, caractérisé par une boisson de base, choisie parmi
- des moûts de bière provenant de malt quelconque ou de mélanges de malts, comme source d'amidon, obtenus par empâtage, comportant le cas échéant une proportion quelconque de malt de seigle ou exclusivement du malt de seigle, ainsi que leurs bières de fermentation haute et de fermentation basse préparées par fermentation;
- des moûts de bières, préparés par empâtage d'une source d'amidon non maltée et broyée contenant des protéines ou des acides aminés, et des enzymes hydrolytiques et protéolytiques, ainsi que leurs bières de fermentation haute et de fermentation basse préparées par fermentation;
- des moûts de bière, préparés à partir d'une source d'amidon n'étant pas à base de céréales avec addition d'enzymes et, le cas échéant, d'acides aminés, et de trempes, ainsi que leurs bières de fermentation haute et de fermentation basse préparées par fermentation;
- des moûts de bière, obtenus à partir de sucres ou de mélanges de sucres avec addition d'acides aminés, ainsi que leurs bières de fermentation haute et de fermentation basse préparées par fermentation;
- kwas et boissons de type kwas.

**23.** Substrats aromatisés par de l'arôme de pain, y compris des boissons ainsi que d'autres produits alimentaires et des produits de consommation de luxe, selon la revendication 21 ou 22, caractérisés par une teneur en arôme de pain par litre ou par kilogramme, qui correspond à la quantité d'extrait ou la quantité d'arôme de pain extractible d'environ 1 à 100 g et, de préférence, d'environ 10 à 100 g de croûte de pain, ou d'environ 3 et 300 ml et, de préférence, d'environ 30 à 300 ml d'un moût de bière préparé exclusivement à partir de malt de seigle.

**24.** Utilisation des arômes de pain selon l'une des revendications 10 à 15 pour aromatiser des boissons et d'autres produits alimentaires et des produits de consommation de luxe ainsi que des agents et des adjuvants et/ou des véhicules pharmaceutiques.